# EUROPÄISCHE PATENTANMELDUNG

(11) **EP 3 981 670 A1**
(43) Veröffentlichungstag der Anmeldung: **13.04.2022**
(21) Anmeldenummer: 21201644.8
(22) Anmeldetag: 08.10.2021
(51) Int. Cl.: B62D 15/02, G01S 13/02, G01S 19/01, G05D 1/00

(54) **KOMFORTSYSTEM MIT EINPARKHILFE FÜR EIN FAHRZEUG**

(30) Priorität: 09.10.2020 DE 102020126613
(71) Anmelder: Huf Hülsbeck & Fürst GmbH & Co. KG, 42551 Velbert (DE)
(72) Erfinder: Schindler, Mirko, 42549 Velbert (DE); Peschl, Andreas, 42555 Velbert (DE); Gornik, Andreas, 58285 Gevelsberg (DE)
(74) Vertreter: Bals & Vogel Patentanwälte PartGmbB

(57) **Zusammenfassung**

Die Erfindung betrifft ein Komfortsystem (10) für ein Fahrzeug (100) mit zumindest einer UWB-Moduleinheit (11), zum Bereitstellen von zumindest einer Fahrzeugfunktion (F), insbesondere einer Navigationsfunktion (Fn) bei einem Fahrzeug (100), aufweisend:
eine UWB-Antenne (11.1) zum Durchführen einer Kommunikation (K) und/oder Detektion (D),
wobei in Abhängigkeit von der Kommunikation (K) und/oder Detektion (D) die Fahrzeugfunktion (F) aktivierbar ist,
ein, insbesondere elektronischer, UWB-Sendeempfänger (11.2) zum Aussenden und/oder Empfangen von elektrischen Signalen von der UWB-Antenne (11.1), die für die Kommunikation (K) und/oder Detektion (D) spezifisch sind,
eine, insbesondere elektronische, Verarbeitungsvorrichtung (11.3) zur Ansteuerung des UWB-Sendeempfängers (11.2), um eine Kommunikation (K) und/oder Detektion (D) durch die UWB-Antenne (11.1) durchzuführen,
und eine, insbesondere elektronische, Schnittstelle (11.4) zum Übermitteln eines Ergebnisses der Detektion (D) und/oder Kommunikation (K) an ein, insbesondere fahrzeugseitiges Steuergerät (12), um die Fahrzeugfunktion (F) in Abhängigkeit von der Detektion (D) und/oder Kommunikation (K) auszulösen.

Ferner ist die Erfindung auch auf ein entsprechendes Fahrzeug (100) sowie ein Verfahren gerichtet.

## Beschreibung

Die vorliegende Erfindung betrifft ein Komfortsystem für Fahrzeuge zum Auslösen zumindest einer Fahrzeugfunktion, insbesondere einer Navigationsfunktion (Fn) gemäß dem Hauptanspruch. Ferner bezieht sich die Erfindung auf ein Fahrzeug nach dem weiteren unabhängigen Vorrichtungsanspruch sowie ein Verfahren zum Auslösen zumindest einer Fahrzeugfunktion, insbesondere einer Navigationsfunktion (Fn) eines Fahrzeuges nach dem unabhängigen Verfahrensanspruch.

Es ist aus dem Stand der Technik bekannt, dass beim Einparken von Fahrzeugen auf großen Parkplätzen oder Parkgaragen, das Problem besteht, dass der nächste freie Parkplatz aufgefunden werden muss. Auf großen Parkplätzen werden deshalb häufig Personen (Anweiser) eingesetzt, die den Fahrzeugen den Weg zum nächsten freien Parkplatz anzeigen. In Parkhäusern gibt es auch sog. Parkleitsysteme, die zumindest für den Benutzer eines Fahrzeuges anzeigen, ob ein Parkplatz schon besetzt ist oder nicht. Dieses geschieht bspw. durch eine Leuchtanzeige oberhalb des Parkplatztes, die bspw. rot oder grün leuchtet, um den Zustand des Parkplatzes anzugeben und dabei gut erkennbar ist.

Üblicherweise findet die Parkplatzsuche auch bei stark verminderten Fahrgeschwindigkeiten des Fahrzeuges statt. Auch ist für den Benutzer des Fahrzeuges nicht sofort erkennbar, wo der nächste freie Parkplatz für ihn ist und wie er dort hingelangt. Hinzu kommt heute auch die Problematik, dass viele Parkplätze über unterschiedlich große Flächen und Zugangsmöglichkeiten verfügen, was je nach Fahrzeug zu Problemen führt. So ist z. B. ein Parkplatz mit einer kleinen Parkfläche nicht für einen Kleinbus geeignet. Damit nutzt es dem Fahrer eines Kleinbusses auch nicht, wenn er zwar einen freien Parkplatz anfährt, der jedoch nicht von der Parkplatzfläche ausreichend groß genug ist zum Parken.

Es ist daher eine Aufgabe der vorliegenden Erfindung, die voranstehend beschriebenen Nachteile zumindest teilweise zu beheben. Insbesondere ist es Aufgabe der vorliegenden Erfindung, den Komfort des Fahrzeuges, insbesondere beim Einparken zu verbessern. Vorteilhafterweise erhält der Benutzer bzw. das Fahrzeug auch eine Information zum nächsten freien Parkplatz, wobei idealerweise der Einparkvorgang automatisch durchführbar ist.

Die voranstehende Aufgabe wird gelöst durch ein Komfortsystem mit den Merkmalen des Hauptanspruchs, ein Fahrzeug mit den Merkmalen des nebengeordneten Vorrichtungsanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Komfortsystem beschrieben sind, selbstverständlich auch im Zusammenhang mit dem erfindungsgemäßen Fahrzeug sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Komfortsystem für ein Fahrzeug mit zumindest einer UWB-Moduleinheit (kurz auch nur Moduleinheit genannt) zum Bereitstellen von zumindest einer Fahrzeugfunktion F, insbesondere einer Navigationsfunktion Fn bei einem Fahrzeug. Anstelle einer Fahrzeugfunktion F (insbesondere Navigationsfunktion Fn) können auch mehrere Fahrzeugfunktionen F (insbesondere Navigationsfunktionen Fn) ausgelöst werden. Die UWB-Moduleinheit stellt dabei vorzugsweise eine kombinierte, einzeln handhabbare und/oder zusammenhängende UWB-Moduleinheit, insbesondere in Form einer Multifunktionseinheit, bevorzugt in Form einer Hardwareeinheit, dar. Die UWB-Moduleinheit weist dabei auf:
- eine UWB-Antenne zum Durchführen einer Kommunikation (d. h. eines Datenaustausches zwischen zwei Geräten) und/oder Detektion (d. h. einer Erfassung von Objekten und/oder Personen mit nur einem Gerät), wobei in Abhängigkeit von der Kommunikation und/oder Detektion die Fahrzeugfunktion F aktivierbar ist,
- ein, insbesondere elektronischer, UWB-Sendeempfänger (auch UWB-Transceiver genannt) zum Aussenden und/oder Empfangen von elektrischen Signalen von der UWB-Antenne, die für die Kommunikation K und/oder Detektion D spezifisch sind,
- eine, insbesondere elektronische, Verarbeitungsvorrichtung zur Ansteuerung des UWB-Sendeempfängers, um eine Kommunikation und/oder Detektion durch die UWB-Antenne durchzuführen, und
- eine, insbesondere elektronische, Schnittstelle zum Übermitteln eines Ergebnisses der Detektion und/oder Kommunikation an ein, insbesondere fahrzeugseitiges Steuergerät, um die Fahrzeugfunktion F in Abhängigkeit von der Detektion und/oder Kommunikation auszulösen.

Die Kernidee besteht darin, dass das Komfortsystem geeignet ist, einerseits einen Datenaustausch mit externen Geräten durchzuführen, um z. B. die erforderlichen Informationen zu den freien Parkplätzen zu erhalten und andererseits auch den Benutzer dabei zu unterstützen, von seinem aktuellen Standort zum freien Parkplatz und ggf. später zum Ausgang zu gelangen. Es sei an dieser Stelle erwähnt, dass neben dem "Einparken" des Fahrzeuges auch das "Ausparken" des Fahrzeuges mit von der Erfindung umfasst ist. Hierbei müssen nur die entsprechenden Zieldaten D_{Z} für das Komfortsystem für den Ausgang aus dem Parkhaus vorliegen.

Nachfolgend wird immer nur der Begriff "Parkhaus" verwendet, auch wenn darunter ein Parkplatz, eine Tiefgarage oder dergleichen für ein Fahrzeug zum Parken verstanden werden soll.

Hierbei ist es denkbar, dass Daten zum aktuellen Ort des Fahrzeuges als Ortsdaten D_{O} und/oder Daten zu einem definierten Zielort des Fahrzeuges als Zieldaten D_{Z} und/oder Daten zur Navigation des Fahrzeuges aus der Umgebung als Navigationsdaten D_{N} an das fahrzeugseitige Steuergerät übermittelbar sind. Die Ortsdaten D_{O} können dabei von einem Ortssensor (z. B. GPS-Antenne) vom Fahrzeug oder einer stationären Senderanlage, wie z. B. einem Parkhaussender stammen. Die Zieldaten D_{Z} können auch dem nächsten freien Parkplatz entsprechen. Auch diese Daten Dz können von einer stationären Senderanlage des Parkhauses oder Parkplatzes entsprechen. Dabei kann die stationäre Senderanlage Teil eines Fahrzeugleitsystems sein. Ferner können auch die Navigationsdaten D_{N} über die stationäre Senderanlage vom Fahrzeugleitsystem stammen. Diese Navigationsdaten D_{N} können Karten des Parkhauses mit Fahrwegen, Hindernissen und weiteren Fahrinformationen (z. B. Fahrtrichtung etc.) umfassen. Auch können die Navigationsdaten D_{N} aus dem fahrzeugseitigen Navigationssystem stammen. Zusätzlich zu den Daten D_{O}, D_{Z} und/oder D_{N} kann zumindest ein Ergebnis einer UWB-Moduleinheit an das Steuergerät übertragbar sein, wobei durch die Fahrzeugfunktion F, insbesondere Navigationsfunktion Fn, eine Navigation des Fahrzeuges vom aktuellen Ort des Fahrzeuges zum definierten Zielort des Fahrzeuges anhand der Ortsdaten D_{O} und/oder Zieldaten Dz und/oder Navigationsdaten D_{N} sowie zumindest einem Ereignis ausführbar ist. Sofern das Fahrzeug über ein Fahrzeugassistenzsystem, z. B. ein automatisches Fahr- und/oder Steuerungssystem, verfügt, kann das Fahrzeug mithilfe des Komfortsystem (durch die erzeugten Fahrzeugfunktion F, insbesondere Navigationsfunktion Fn) selbstständig den Weg zum freien Parkplatz D_{Z} anfahren und dort einparken. Die vorhandenen UWB-Einheiten können dabei die autonome Fahrt des Fahrzeuges während der Detektion überwachen und unterstützen / ansteuern, wie nachfolgend noch näher erläutert wird.

Der UWB-Sendeempfänger kann in Form eines UWB-Front-End-Moduls aufgebaut sein. Die Verarbeitungsvorrichtung kann eine elektronische Verarbeitungsanordnung sein, und zur Verarbeitung bspw. einen Mikrocontroller (mit Speicher) aufweisen. Die Verarbeitungsvorrichtung kann den UWB-Sendeempfänger ansteuern und die elektrischen Signale, die von dem UWB-Sendeempfänger gesendet und/oder empfangen werden, verarbeiten, um die Kommunikation und/oder die Detektion auszuwerten und ein Ergebnis bzw. eine Information anhand der Kommunikation und/oder der Detektion zur erhalten. Auch kann die Verarbeitungsvorrichtung in Abhängigkeit von der Auswertung der Kommunikation und/oder der Detektion einen (Funktions-)Code für eine entsprechende Fahrzeugfunktion F generieren, um die entsprechende Fahrzeugfunktion F zu triggern. Auch ist es denkbar, dass letztendlich die entsprechende Fahrzeugfunktion F anhand der Ereignisse von einer ("1") oder mehreren UWB-Moduleinheit, die diese Ereignisse über ihre Schnittstellen an das Steuergerät übermitteln, im Steuergerät generiert wird. Damit wir die entsprechende Fahrzeugfunktion F indirekt von der oder den UWB-Moduleinheiten ausgelöst.

Die Schnittstelle kann ebenfalls eine elektronische Schnittstelle sein, die die Moduleinheit elektrisch, steuerungstechnisch und datentechnisch mit einem Steuergerät des Fahrzeuges verbinden kann, um z. B. über die Schnittstelle die Ergebnisse der Kommunikation und/oder der Detektion an das Steuergerät zu übermitteln und/oder über die Schnittstelle eine Aktivierung von der Fahrzeugfunktion F in Abhängigkeit von der Kommunikation und/oder der Detektion zu triggern.

Die elektrischen Signale, die von dem UWB-Sendeempfänger gesendet und/oder empfangen werden, können für die Kommunikation und/oder die Detektion spezifisch sein. Darunter ist insbesondere zu verstehen, dass anhand der elektrischen Signale ein Ergebnis der Kommunikation und/oder der Detektion durch die Verarbeitungsvorrichtung ermittelt werden kann.

Ein Ergebnis einer Detektion kann wenigstens eine Information darüber umfassen, ob sich ein Benutzer bzw. eine Person und/oder ein Objekt in der Nähe der Moduleinheit befindet, sich bewegt oder sich auf eine besondere Weise bewegt.

Ein Ergebnis bzw. eine Information, die bei einer Kommunikation zwischen der Moduleinheit und einem fahrzeugseitigen Steuergerät übertragen wird, kann zumindest ein Funktionscode für eine entsprechende Fahrzeugfunktion F oder eine Abstandsinformation (zwischen der UWB-Moduleinheit und einem Objekt), die bei der Detektion von der UWB-Moduleinheit ermittelt worden ist, umfassen.

Ein Ergebnis einer Kommunikation zwischen der Moduleinheit und einem fahrzeugseitigen Steuergerät und/oder einem benutzerseitigen Mobilgerät kann nicht nur die Authentifizierungsinformation und/oder den Funktionscode umfassen, sondern auch Ortsdaten, Navigationsdaten, Nachrichtendaten, Musikdaten und dergleichen. Sicherheitshalber muss sich hierfür der Benutzer vorher identifizieren, damit keine fremden Daten zwischen der Moduleinheit und einem Mobilgerät ausgetauscht werden.

Ferner ist es möglich, dass die UWB-Antenne (einer UWB-Moduleinheit) in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist, wobei vorzugsweise der Frequenzbereich zwischen 30 MHz bis 10,6 GHz, bevorzugt zwischen 3,0 bis 10,6 GHz liegt. Damit ergeben sich die technischen Vorteile, dass eine Kommunikation und eine Detektion möglich sind.

Ein Signal für die Kommunikation kann z. B. eine definierte Folge kurzer UWB-Impulse sein. Die definierte Folge kurzer UWB-Impulse, die bspw. mit Zeitstempeln versehen werden können, kann mithilfe der Pulsphasenmodulation im Rahmen einer digitalen Funkübertragung erzeugt werden. Dabei wird ein UWB-Puls relativ zu einem konstanten Referenztakt in der zeitlichen Lage, nämlich der Phase, verschoben. Die Phasenverschiebung zwischen den UWB-Impulsen symbolisiert dabei die Information, wie z. B. eine Authentifizierungsinformation. Die Periodendauer und die Amplitude bleiben dabei gleich.

Ein UWB-Impuls kann bspw. als ein Teil einer Sinusschwingung von einer begrenzten Dauer von wenigen Nanosekunden oder sogar Pikosekunden abgebildet werden, der einer breiten Spektrallinie von mindestens 5 GHz, insbesondere von 7,5 GHz, bis über 8,8 GHz entspricht.

Aufgrund der extrem kurzen UWB-Impulse kann eine hohe Übertragungsrate von 480 bis 1320 Mbit/s bei der Kommunikation erzielt werden, bspw. mithilfe einer digitalen Funkübertragung.

Ebenfalls aufgrund der extrem kurzen UWB-Impulse kann eine hohe Auflösung von wenigen Millimetern bis sogar Mikrometern bei der Detektion erzielt werden, bspw. mithilfe einer Laufzeitmessung der UWB-Impulse, die bspw. mit Zeitstempeln versehen werden können.

Die Abmessung der UWB-Antenne bestimmt die Mittelfrequenz und die Bandbreite des UWB-Impulses. Die gesamte Sendeleistung der UWB-Antenne von wenigen Milliwatt (bspw. von ca. 0,5 mW) wird auf einen so großen Frequenzbereich verteilt, dass für den Funkbetrieb schmalbandiger Übertragungsverfahren nahezu keine Störungen hervorgerufen werden.

Der Erfindungsgedanke liegt dabei darin, dass die UWB-Moduleinheit als ein einzelner Knoten oder mit anderen Worten als ein Satellit bereitgestellt wird, der als eine einzige zusammenhängende Hardwareeinheit mit allen nötigen Sensorfunktionen (Kommunikation und Detektion), Verarbeitungs- und Ansteuerungskomponenten sowie einer Schnittstelle zum fahrzeugseitigen Steuergerät bereitgestellt wird, um mithilfe nur einer Moduleinheit die Fahrzeugfunktion F, insbesondere Navigationsfunktion Fn (für ein entsprechendes Fahrzeugassistenzsystem) zu erzeugen und/oder bereitzustellen. Dabei kann nur eine UWB-Antenne (die wiederum mehrere UWB-Antenneneinheiten umfassen kann) alle nötigen Sensorfunktionen für die Fahrzeugfunktion F bereitstellen. Vorteilhafterweise kann dadurch eine einfach und kostengünstig aufgebaute, leicht montierbare und einfach (elektrisch und steuerungstechnisch sowie datentechnisch) anschließbare Moduleinheit bereitgestellt werden, die Fahrzeugfunktion F bei einem Fahrzeug auf eine vorteilhafte Weise zur Verfügung stellen kann. Zudem kann dadurch eine Moduleinheit bereitgestellt werden, die zuverlässig im Betrieb ist und die die Sicherheit beim Erzeugen / Bereitstellen von der Fahrzeugfunktion F und im Betrieb von Fahrzeugassistenzsystemen erheblich erhöht.

Ein Erfindungsgedanke liegt zudem darin, dass die Moduleinheit die UWB-Technologie nutzt, um eine Kommunikation, d. h. Datenaustausch zwischen zwei Geräten, und/oder eine Detektion, d. h Erfassung von Objekten und/oder Personen mit nur einem Gerät, nämlich der Moduleinheit, durchzuführen. Dabei kann die UWB-Antenne für die Kommunikation und für die Detektion eine gemeinsame UWB-Antennen-Einheit oder zwei separate UWB-Antennen-Einheiten aufweisen, sodass die Kommunikation und die Detektion simultan oder sequenziell durchgeführt werden kann.

Zudem ist im Rahmen der Erfindung denkbar, dass bei der Kommunikation ein Datenaustausch zwischen der UWB-Moduleinheit und einem (externen / nicht fahrzeugseitigen) Kommunikationsgerät mit UWB-Schnittstelle erfolgt. Dieses Kommunikationsgerät kann ein mobiler ID-Geber mit UWB-Schnittstelle sein, wodurch ein automatischer Zugang zum Fahrzeug möglich ist. Auch kann das Kommunikationsgerät mit der UWB-Schnittstelle ein Mobilfunktelefon, Tablet oder ein tragbarer Computer sein, um den zuvor erwähnten ID-Geber zu ersetzen und/oder zu ergänzen. Ferner kann das externe Kommunikationsgerät mit UWB-Schnittstelle auch zu einem Tor-/ oder Schrankenantrieb gehören, um diesen automatisch (und direkt) anzusteuern. Hierbei kann dann eine direkte Kommunikation zwischen der jeweiligen UWB-Moduleinheit und dem externen Kommunikationsgerät mit UWB-Schnittstelle stattfinden. So kann diese Kommunikation zwischen einer stationären Senderanlage (hier das externe Kommunikationsgerät) als Teil eines Fahrzeugleitsystems eines Parkhauses und der UWB-Moduleinheit erfolgen, wobei entsprechende Daten D_{O}, D_{N} und/oder D_{Z} übertragbar sind. Diese Übertragung kann auch zweckmäßiger verschlüsselt erfolgen. Auch ist vorher eine Authentifizierung zwischen Fahrzeug und Fahrzeugleitsystem, insbesondere der Senderanlage, eines Parkhauses vorstellbar, womit auch elektronische Zahlungen für eine erforderliche Parkplatzmiete abrechenbar sind.

Bei einer Detektion der UWB-Moduleinheit erfolgt eine messtechnische Erfassung von zumindest einem Objekt anhand von reflektierenden Signalen, wobei in der Regel diese Signale zuvor von der (selben) UWB-Moduleinheit stammen (und wieder erfasst werden) und zumindest eine Abstandmessung zum Objekt ermöglichen. Hierbei wird die Laufzeit der reflektierten Signale von der Moduleinheit, erfasst, woraus sich ein Abstand zum Objekt ermitteln lässt. Diese Information zum Abstand der entsprechenden Moduleinheit kann als ein Ereignis an das Steuergerät über die Schnittstelle übermittelt werden.

Eine Detektion, bspw. zwecks Positionsbestimmung, kann eine oder mehrere UWB-Sensoreinheiten umfassen, um die 2D- oder 3D-Auflösung bereitzustellen. So ist es auch optional denkbar, dass zumindest zwei UWB-Moduleinheit für ein Fahrzeug vorgesehen sind, wobei die jeweiligen Ergebnisse (von den gemessenen Abständen zum Objekt) der UWB-Moduleinheiten im Steuergerät verarbeitbar sind, um bei der Detektion neben einer Abstandmessung zum Objekt auch eine Ortungsmessung des Objekts, insbesondere durch Triangulation, zu bewirken. Die Berechnung zur Ortung des Objektes erfolgt z. B. mittels trigonometrischer Funktionen aus den gemessenen Abständen zum Objekt und einem bekannten Abstand zwischen den beiden relevanten Moduleinheiten, die die Abstandsmessungen vorgenommen haben. Vereinfacht könnte man auch sagen, dass von zwei Punkten, nämlichen den jeweiligen Moduleinheiten, deren Abstand bekannt ist, Messungen zu beliebig anderen Punkten im Raum bzw. des Umfeldes (vom Fahrzeug) erfolgen, um deren Ort eindeutig zu ermitteln. Geometrisch gesehen, liegen die beiden gemessenen Abstände auf Kreisbahnen um die jeweilige Moduleinheit, wobei sich die Kreisbahnen zumindest an dem entsprechenden Ort des Objekts schneiden. Diese Ermittlung und/oder Berechnung zur Ortung des Objektes findet vorteilhafterweise in dem Steuergerät statt.

Ein weiterer Vorteil kann im Rahmen der Erfindung erzielt werden, wenn zumindest 2 UWB-Moduleinheiten, bevorzugt 4 UWB-Moduleinheiten und besonders bevorzugt 5 UWB-Moduleinheiten vorhanden sind. Hierdurch kann die Genauigkeit der Messungen und der Ortung der Objekte verbessert werden. Außerdem kann somit das gesamte Umfeld vom Fahrzeug, gemeint sind 360° rund ums Fahrzeug, erfasst werden.

Bei einer weiteren Möglichkeit kann vorgesehen sein, dass im Steuergerät wenigstens eine Speichereinheit vorhanden ist, womit Daten von der Schnittstelle, insbesondere der Ergebnisse von zumindest einer UWB-Moduleinheit, weitere Daten D_{F} vom Fahrzeug, Ortsdaten D_{O}, Zieldaten D_{Z} und/oder Navigationsdaten D_{N} als Ist-Daten speicherbar sind, wobei insbesondere aus diesen Ist-Daten die definierte Fahrzeugfunktion F, insbesondere Navigationsfunktion Fn, durch das Steuergerät auslösbar ist. Dabei können die Ist-Daten zeitgleich in der Speichereinheit gespeichert werden. Unter dem Begriff "zeitgleich" oder "aus der gleichen Zeit" wird einerseits der gleiche Zeitpunkt der Detektion verstanden und andererseits auch die gleiche Zeitspanne, in der die Detektionen in einem konkreten Zeitabschnitt stattgefunden haben. Hierdurch erfasst das Komfortsystem die konkrete Situation rund ums Fahrzeug (Umfelderfassung) während der Fahrt sowie beim Einparken.

Dabei kann die Detektion einer oder mehrerer UWB-Moduleinheit (zeit-) kontinuierlich erfolgen, wobei mehr als 2, bevorzugt mehr als 5 und besonders mehr als 10 Messungen pro Sekunde erfolgen und die entsprechenden Ereignisse (in Form von Abstandsinformationen zu Objekten) an das Steuergerät gesendet werden. Aus diesen Daten wird dann die Fahrzeugfunktion F, insbesondere Navigationsfunktion Fn in einer Auswerteinheit des Steuergeräts generiert, die an ein Fahrzeugassistenzsystem weiterleitbar ist. Bei einem passiven Fahrzeugassistenzsystem kann dem Benutzer der Fahrweg zum Ziel im Fahrzeug auf einer Anzeige angezeigt werden. Bei einem aktiven Fahrzeugassistenzsystem kann das Fahrzeug selbstständig den Fahrweg zum Ziel erreichen. Da sowohl die Navigationsdaten D_{N} als auch die Abstandsdaten zu etwaigen Objekten im Fahrweg vom Fahrzeug, insbesondere zeitaktuell vorliegen, kann eine Kollision mit Hindernissen (in Form von Personen, Gebäudeteile, Fahrzeug etc.) zuverlässig vermieden werden.

Auch ist es denkbar, dass der Benutzer des Fahrzeuges anhand eines Informationssystems den Fahrweg zwischen dem derzeitigen Ort des Fahrzeuges und dem Zielort beeinflusst bzw. vorgibt. Hierbei kann er auch den Zielort auswählen, wenn er z. B. feststellt, dass die Parkplatzfläche für sein Fahrzeug nicht ausreichend sein könnte. Diese eingegebenen Daten können als weitere Daten D_{F} vom Fahrzeug mit in das Steuergerät einfließen und bei der Erzeugung der Fahrzeugfunktion F, insbesondere in der Navigationsfunktion Fn in der Auswerteinheit berücksichtigt werden. Auch ist es denkbar, dass diese zusätzlichen Informationen über ein mobiles Kommunikationsgerät, wie z. B. ein Mobilfunktelefon, SmartPhone, SmartWatch oder Tablet an das Steuergerät überreichbar sind.

Bevorzugt kann es vorgesehen sein, dass die jeweiligen Ergebnisse der UWB-Moduleinheiten eine (zeitgleiche) Umfeld-Erfassung vom Fahrzeug, insbesondere ein 360° Umfeld-Erfassung, anhand der Objekte ums Fahrzeug zu einer Zeit bilden, und ggf. mit weiteren Daten vom Fahrzeug und/oder den Fahrzeug-Sensoren im Steuergerät gespeichert sind. Die zuvor erwähnten weiteren Daten D_{F} vom Fahrzeug und/oder den Daten der Fahrzeugsensoren, die im Steuergerät speicherbar sind, können folgende Informationen vom Fahrzeug umfassen: Geschwindigkeit, Position, Uhrzeit, Datum, Temperatur, Feuchtigkeit und/oder Helligkeit. Diese Daten können dann mit den Daten bzw. Ereignissen der Moduleinheiten der Steuereinheit eingehen und Einfluss nehmen auf die Fahrzeugfunktionen F. Die Geschwindigkeit des Fahrzeuges ist wichtig für die Navigation des Fahrzeuges auf dem Fahrweg zu seinem Ziel. Dabei spielt auch die jeweilige aktuelle Position des Fahrzeuges eine Rolle, die entweder aus den gemessenen Daten der UWB-Moduleinheiten berechnet werden kann oder durch einen Ortssensor erfasst werden kann. Die Uhrzeit und das Datum spielen eine wesentliche Rolle, auf welchem Parkplatz das Fahrzeug geparkt werden soll. So können dunkle Parkplätze im Parkhaus zu später Uhrzeit vermieden werden. Auch im Winter kann ein Parken auf dem Parkplatzoberdeck ohne Dach vermieden werden, um das Fahrzeug und den Benutzer nicht den vollen Witterungsverhältnissen auszusetzen. Auch die Temperatur, Feuchtigkeit und Helligkeit spielen eine vergleichbare Rolle, die bei der Parkplatzsuche ggf. berücksichtigt werden müssen bzw. vom Benutzer berücksichtigt werden.

Im Rahmen der vorliegenden Erfindung soll unter dem Begriff "Tor" sowie "Tür" jegliche Zugangsbeschränkung für ein Fahrzeug, wie z. B. eine Schranke, ein Gitter oder dergleichen, verstanden werden, die eine Beschränkung der Durchfahrt für das Fahrzeug darstellt.

Optional kann es vorgesehen sein, dass bei der UWB-Moduleinheit zumindest die UWB-Antenne sowie der UWB-Sendeempfänger auf einer gemeinsamen Leiterplatte angeordnet sind, wobei die UWB-Antenne durch eine Leiterbahn auf einer Leiterplatte der UWB-Einheit ausgebildet ist, wobei vorzugsweise auch die Verarbeitungsvorrichtung auf der Leiterplatte angeordnet ist und/oder die UWB-Antenne durch ein fotolithografisches Verfahren auf der Leiterplatte hergestellt ist. Hierdurch kann die UWB-Moduleinheit besonders kompakt und kostengünstig hergestellt werden. Idealerweise ist die gesamte UWB-Moduleinheit in einem gemeinsamen Gehäuse untergebracht, womit sie auch an jeder Stelle im Fahrzeug anbringbar ist.

Vorzugsweise kann vorgesehen sein, dass bei der UWB-Moduleinheit die Verarbeitungsvorrichtung und/oder der UWB-Sendeempfänger in Form eines Mikrocontrollers, insbesondere mit einer Speichereinheit ausgeführt ist. Damit lässt sich die Moduleinheit frei ansteuern, um alle Funktionen ausnutzen zu können, und auch ggf. programmieren, wodurch das Einsatzfeld der Moduleinheit vergrößert ist.

Es kann von Vorteil sein, wenn im Rahmen der Erfindung bei der UWB-Moduleinheit zwei UWB-Antennen zum Einsatz kommen, wobei eine UWB-Antenne zur Kommunikation dient und die andere UWB-Antenne zur Detektion dient. Aufgrund von unterschiedlichen UWB-Antennen können die Kommunikation und die Detektion wahlweise simultan oder sequenziell durchgeführt werden. Mithilfe von unterschiedlichen UWB-Antennen für die Kommunikation und die Detektion können die UWB-Antennen speziell für die Durchführung der Kommunikation und Detektion ausgelegt werden. Auf diese Weise können die Kommunikation und Detektion mit erhöhter Genauigkeit durchgeführt werden.

Des Weiteren ist es denkbar, dass zumindest eine NFC-Einheit oder eine BLE-Einheit vorhanden ist, um den Funktionsumfang des Komfortsystems zu erhöhen, welche vorzugsweise innerhalb eines Gehäuses einer UWB-Moduleinheit angeordnet sind, wobei insbesondere die NFC-Einheit und/oder eine BLE-Einheit ebenfalls Daten generieren. Unter "NFC" wird eine Nahfeldkommunikation (Near-Field-Communication) zum kontaktlosen Austausch von Daten per elektromagnetischer Induktion (insbesondere mit passiven HF-RFID-Tags nach ISO/IEC 14443 oder ISO/IEC 15693) verstanden. Auch kann durch die NFC-Einheit ein bargeldloses Bezahlen erfolgen. Hierdurch kann der gesamte Einparkprozess weiter automatisiert werden, auch wenn das Parken selbst kostenpflichtig ist. Zu diesem Zweck kann die vorhandene NFC-Einheit eine Kommunikation z. B. mit der stationären Senderanlage vom Parkhaus aufnehmen, um den Bezahlvorgang für das Parken vorzunehmen. Durch die NFC-Einheit ist es möglich im Rahmen eines Stromausfalls über die vorhandene NFC-Schnittstelle Energie von einem mobilen Gerät, insbesondere Mobilfunktelefon auf eine UWB-Moduleinheit von außen zu übertragen. Somit kann die NFC-Einheit energiequellenfrei ausgestaltet sein, wobei vorzugsweise elektrische Energie vom mobilen Gerät zur NFC-Einheit übertragbar ist. Hierdurch kann ein Notfallprogramm gestartet werden, um z. B. trotzdem eine Tür oder Klappe des Fahrzeuges z. B. beim Stromausfall zu öffnen. Auch die erwähnte BLE-Einheit kann zur Erhöhung der Sicherheit dienen, in dem ein weiterer Identifizierungscode über die Bluetooth-Schnittstelle der BLE-Einheit ausgetauscht werden. Des Weiteren können auch Daten über die BLE-Schnittstelle der BLE-Einheit bei einer größeren Distanz zwischen Fahrzeug und einem mobilen Gerät (z. B. Mobilfunktelefon / ID-Geber) oder einer stationären Senderanlage vom Parkhaus ausgetauscht werden. Unter "BLE" (Bluetooth Low Energy) wird eine Datenübertragung bis ca. 25 m verstanden, die per Funk im 2,4-GHz-Bereich arbeitet, und wenige Energie verbraucht. Eine Integration bei bzw. in den heutigen Kommunikationsgeräten (im Fahrzeug und/oder mobilen Gerät) ist kostengünstig zu realisieren. Außerdem können über die BLE-Einheit gleichzeitig mehrere Kommunikationsgeräte miteinander verbunden werden.

Auch ist es denkbar, dass das Steuergerät über eine Daten-Schnittstelle weitere Daten D_{F} vom Fahrzeug und/oder den Fahrzeug-Sensoren erhält, wobei insbesondere Daten zur
- Geschwindigkeit
- Position
- Uhrzeit
- Datum
- Temperatur
- Feuchtigkeit
- Helligkeit
mit in die Datenverarbeitung der Steuereinheit eingehen und Einfluss nehmen auf die Fahrzeugfunktion F.

Das Komfortsystem kann nicht nur eine ("1") Fahrzeugfunktion F auslösen, sondern auch gleichzeitig oder in einem definierten Ablauf hintereinander mehrere Fahrzeugfunktionen F ansteuern bzw. auslösen. Beispielsweise kann eine Navigationsfunktion Fn und gleichzeitig eine Fahrgeschwindigkeit des Fahrzeuges angesteuert werden. Auch können mehrere unterschiedliche Fahrzeugfunktion F je nach Situation ausgelöst werden, z. B. kann bei einem Auftreten eines Hindernisses das Fahrzeug gestoppt werden und anschließend die Warnblickanlage eingeschaltete werden. Auch können konkrete Ortangaben bzw. Ortsdaten vom Fahrzeug (z. B. als zusätzliche Daten vom Fahrzeug und/oder den Fahrzeug-Sensoren) herangezogen werden, wie z. B. GPS-Daten vom GPS-Empfänger des Fahrzeuges.

Auch ist es optional denkbar, dass die UWB-Moduleinheit über die UWB-Antenne einen Identifizierungscode und/oder einen Funktionscode mit zumindest einem Kommunikationsgerät vom Fahrzeug (ID-Geber / Mobilfunktelefon) oder einem externen Kommunikationsgerät (Antrieb für Garagentor) austauscht. In diesem Fall steuert somit die UWB-Moduleinheit direkt ein mobiles Kommunikationsgerät vom Fahrzeug, z. B. in Form eines ID-Gebers oder Mobilfunktelefons für den Zugang zum Fahrzeug oder ein externes Kommunikationsgerät, z. B. eine Garagenantrieb mit UWB-Technologie an.

Es ist ferner denkbar, dass die Fahrzeugfunktion F zumindest einer der folgenden Funktionen umfasst:
- Lenkbefehl an das Fahrzeugmanagementsystem
- Geschwindigkeitsbefehl an das Fahrzeugmanagementsystem
- Bremsbefehl an das Fahrzeugmanagementsystem
- Identifikationsvorgang mit einem Kommunikationsgerät, insbesondere in Form eines mobilen ID-Geber fürs KFZ / stationären Senderanlage vom Parkhaus
- Ver- oder Entriegeln einer Zentralverriegelung
- Öffnen oder Schließen einer Tür oder Klappe vom Fahrzeug
- Ein- oder Ausschalten von Licht im Fahrzeug
- Ein- oder Ausschalten von einer Alarmanlage im Fahrzeug
- Ein- oder Ausschalten von einer Heizung oder Klimaanlage im Fahrzeug
- Schließen von Fenstern oder Schiebedach vom Fahrzeug
- Ein- oder Ausklappen von Spiegeln
- Ein- oder Ausklappen einer Anhängerkupplung

Durch die zuvor genannten Aufzählungen wird deutlich, dass sich der Komfort durch das Komfortsystem umfangreich erweitern lässt.

Ebenfalls Gegenstand der Erfindung ist ein Fahrzeug mit zumindest einem Komfortsystem wie es zuvor beschrieben wurde und wie es in den Ansprüchen definiert ist.

Ferner ist es beim Fahrzeug denkbar, dass wenigstens eine UWB-Moduleinheit für eine Fahrzeugfunktion F vorgesehen ist, und/oder eine oder mehrere UWB-Moduleinheiten, insbesondere außenseitig am Fahrzeug, links- und/oder rechtsseitig im Front- und/oder Heckbereich, am Fahrzeugdach, bevorzugt in einer Finne am Fahrzeugdach, am Außenspiegel, an einer A-, B- und/oder C-Säulenverkleidung und/oder an einem Türgriff angeordnet ist/sind. Durch den Einsatz von mehreren UWB-Moduleinheiten an unterschiedlichen Stellen im Fahrzeug kann der Einsatz des Komfortsystems weiter verbessert werden und es lassen sich zahlreiche Situationen erfassen, die zur Auslösung einer Fahrzeugfunktion F genutzt werden.

Es ist auch zu erwähnen, dass das Komfortsystem im Fahrzeug, ein Park Distance Control-System vollständig, als auch mit den erforderlichen Sensoren, ersetzen kann. Somit ist das Fahrzeug Park Distance Control-System frei ausgestaltet.

Ebenfalls Gegenstand der Erfindung ist ein Verfahren zum Auslösen einer Fahrzeugfunktion F, insbesondere eine Navigationsfunktion (Fn), eines Fahrzeuges durch ein Komfortsystem, insbesondere nach einem der vorhandenen Ansprüche, umfassend mindestens eine UWB-Moduleinheit. Hierbei ist vorgesehen, dass die UWB-Moduleinheit in einem ersten Modus als eine Detektionseinheit zum Durchführen einer Detektion von Objekten um das Fahrzeug betrieben wird, und wobei die UWB-Moduleinheit in einem zweiten Modus als eine Kommunikationseinheit zum Durchführen einer Kommunikation mit einem Kommunikationsgerät mit UWB-Schnittstelle betrieben wird. Hierdurch kann vorzugsweise ein autonomes Fahren, insbesondere Einparken, des Fahrzeugs zwischen einem aktuellen Ort des Fahrzeuges und einem definierten Zielort des Fahrzeuges ermöglicht werden. Damit bringt das erfindungsgemäße Verfahren die gleichen Vorteile mit sich, wie sie ausführlich mit Bezug auf erfindungsgemäße Komfortsystem und/oder das erfindungsgemäße Fahrzeug beschrieben worden sind.

Ferner kann es bei dem Verfahren vorgesehen sein, dass Daten zur aktuellen Ort des Fahrzeugs als Ortsdaten D_{O} und/oder Daten zu einem definierten Zielort des Fahrzeugs als Zieldaten D_{Z} und/oder Daten zur Navigation des Fahrzeuges aus der Umgebung als Navigationsdaten D_{N} an das fahrzeugseitige Steuergerät übermittelt werden. Diese Daten können von einem Fahrzeugleitsystem von einem Parkhaus stammen. Auch können teilweise diese Daten als Satellitendaten (z. B. GPS) oder von anderen Informationsquellen stammen. Ferner wird vorzugsweise zumindest ein Ergebnis einer UWB-Moduleinheit an das Steuergerät übertragen, wodurch die Fahrzeugfunktion F, insbesondere eine Navigationsfunktion Fn eine Navigation des Fahrzeugs des aktuellen Ort des Fahrzeug zum definierten Zielort des Fahrzeugs anhand der Ortsdaten D_{O} und/oder Zieldaten D_{Z} und/oder Navigationsdaten D_{N} sowie zumindest ein Ergebnis ausgeführt wird. Wie bereits erwähnt, kann bei einem automatischen Fahrzeugassistenzsystem der Fahrweg selbstständig vom Fahrzeug vom aktuellen Ort bis zum definierten Zielort durchgeführt werden. Auch der Einparkvorgang selber auf den entsprechenden Parkplatz kann dabei umfasst sein.

Es kann im Rahmen der Erfindung vorgesehen sein, dass die UWB-Moduleinheit simultan im ersten Modus (als eine Detektionseinheit) und im zweiten Modus (als eine Kommunikationseinheit) betrieben wird, oder dass die UWB-Moduleinheit alternierend im ersten Modus oder im zweiten Modus betrieben wird. Je nach gewünschten Spezifikationen der UWB-Moduleinheit kann die eine oder die andere Art die Moduleinheit zu betreiben vorteilhaft sein. Bei einem alternierenden Betrieb der Moduleinheit kann sichergestellt werden, dass sich die Kommunikation und Detektion nicht überlagern. Bei einem synchronen Betrieb der Moduleinheit können die Kommunikation und die Detektion parallel erfolgen und die Fahrzeugfunktionen schnell bereitgestellt werden.

Es kann ferner möglich sein, dass zumindest eine UWB-Moduleinheit im ersten Modus zur Detektion von Objekten um das Fahrzeug betrieben wird, und das Ergebnis E aus der Detektion von der UWB-Moduleinheit ans Steuergerät weitergeleitet werden, und im Steuergerät das Ergebnis datentechnisch verarbeitet wird. Hierbei können zeitgleich weitere Ergebnisse der UWB-Moduleinheiten und/oder Daten D_{F} vom Fahrzeug und/oder den Fahrzeug-Sensoren im Steuergerät als Situations-Daten verarbeitet und/oder gespeichert werden, wie zuvor beschrieben.

Es kann weiter möglich sein, dass jede UWB-Moduleinheit ein Ergebnis E ermittelt, die zusammengefasst eine Umfeld-Erfassung vom Fahrzeug, insbesondere ein 360° Umfeld-Erfassung, anhand der Objekte ums Fahrzeug zu einem Zeitpunkt bilden, und zeitgleich mit weiteren Daten D_{F} vom Fahrzeug, Ortsdaten D_{O}, Zieldaten D_{Z} und/oder Navigationsdaten D_{N} als Ist-Daten im Steuergerät gespeichert werden. Zusätzlich können auch Daten D_{F} vom Fahrzeug als weitere Ist-Daten im Steuergerät gespeichert werden. Anhand der nun vorliegenden Datenbasis ist das Komfortsystem in der Lage die gewünschte Fahrzeugfunktion F, insbesondere Navigationsfunktion Fn zu erzeugen, die eine Basis für eine Anzeige der Fahrweginformation im Fahrzeug ist oder als Basis für ein automatisches Fahrzeugassistenzsystem zum automatischen Fahren zum Zielort dient. Die Auswertung der Ist-Daten können durch mathematische Algorithmen und Verfahren sowie Verfahren zur künstlichen Intelligenz oder moderne mathematische Modelle (wie z. B. der künstlichen Intelligenz, neuronale Netze und/oder Fuzzy-Logik und dergleichen) erfolgen, um die erforderliche Fahrzeugfunktion F oder mehrere hintereinander folgende Fahrzeugfunktionen F zu generieren.

Auch ist es denkbar, dass bei der Erzeugung der Ist-Daten eine Überprüfung, insbesondere durch das Steuergerät, der definierten Fahrzeugfunktion F, insbesondere Navigationsfunktion Fn mit den Navigationsdaten Dn und/oder zumindest einem Abstand A zu einem Objekt erfolgt. Hierdurch können Kollisionen beim autonomen Fahren, insbesondere beim Einparken des Fahrzeuges bereits im Vorfeld vermieden werden. Auch kann der Fahrer auf gewisse Hindernisse im Fahrweg bereits durch eine Anzeige der Hindernisse im Fahrzeug aufmerksam gemacht werden.

Vorteilhafterweise kann bei einer Moduleinheit vorgesehen sein, dass nicht nur die Ergebnisse der Kommunikation und/oder der Detektion an ein benutzerseitiges Mobilgerät, insbesondere Mobiltelefon, übertragen werden, sondern auch ein Befehlscode.

Der Befehlscode kann dazu dienen, das Mobilgerät zu veranlassen, einen Benutzer über die Interaktion mit der Moduleinheit (d. h. über die Ergebnisse der Kommunikation und/oder der Detektion und/oder über entsprechende Fahrzeugfunktionen), die mithilfe der Moduleinheit aktiviert wurden, zu informieren.

Mit anderen Worten kann die Moduleinheit das benutzerseitige Mobilgerät, insbesondere Mobiltelefon, veranlassen, einen Benutzer über die Interaktion mit der Moduleinheit (d. h. über die Ergebnisse der Kommunikation und/oder der Detektion und/oder über entsprechende Fahrzeugfunktionen), die mithilfe der Moduleinheit aktiviert wurden, zu informieren.

Das benutzerseitige Mobilgerät kann zum Informieren des Benutzers eine haptische Rückmeldung, bspw. durch Vibration, z. B. mithilfe einer Piezoeinheit, eine akustische Rückmeldung, bspw. durch Klingeln, und/oder eine visuelle Rückmeldung, bspw. durch Anzeigen im Display, erzeugen.

Eine haptische, akustische und/oder visuelle Rückmeldung durch das Mobilgerät kann für schlüssellose und/oder berührungslose Zugangssysteme zu einem Fahrzeug oder zu einem anderen Objekt, wie. z. B. Garage, von Vorteil sein, bspw.:
- zum Ver- und/ oder Entriegeln einer Zentralverriegelung, sog. Aktiv-Keyless-Entry-Systeme oder Passiv-Keyless-Entry-Systeme, und/oder
- zum Öffnen und/oder Schließen von beweglichen Klappen, sog. Bewegungs-und/oder Gestikkontrolle, vorzugsweise für eine kontaktlose Betätigung von Klappen, insbesondere Heckklappen, Tankklappen, Steckerklappen, Türen, Türgriffen und/oder Spiegeln,
- zum Betätigen, bspw. zum Öffnen und/oder Schließen, eines Garagentors.

Der Benutzer kann über das Vibrieren/Klingeln des Mobilgeräts eine haptische/akustische Rückmeldung erhalten, dass seine Bewegung/Geste erkannt wurde, und/oder dass der Zugang zum Fahrzeug gewährt wurde, und/oder dass eine bewegliche Klappe, wie gewollt, geöffnet wird usw. Dies kann nicht nur zur Steigerung des Komforts, sondern auch zum Erhöhen der Sicherheit bei dem Auslösen von Fahrzeugfunktion führen, die mithilfe der Moduleinheit aktiviert werden.

Eine haptische, akustische und/oder visuelle Rückmeldung durch das Mobilgerät kann weiterhin bei Navigieren in einem Parkhaus, bspw. beim Erreichen eines Garagentors vorteilhaft sein.

Bei Fahrzeugassistenzsystemen, wie z. B. Sitzplatzbelegungserkennung, Kind-im-Kindersitz-Erkennung und/oder Hund-im-Fahrzeug-Erkennung, kann es weiterhin von Vorteil sein, wenn die Ergebnisse der Kommunikation und/oder der Detektion, die mithilfe der Moduleinheit durchgeführt wurden, und/oder über entsprechende Fahrzeugfunktionen, die mithilfe der Moduleinheit aktiviert wurden, an ein benutzerseitiges Mobilgerät übertragen werden. Auch dabei kann zusätzlich ein Befehlscode von der Moduleinheit an das Mobilgerät übertragen werden.

Das benutzerseitige Mobilgerät kann zum Informieren des Benutzers eine Meldung/Warnung/Alarmierung ausgeben. Eine Meldung/Warnung/Alarmierung kann insbesondere dann ausgegeben werden, wenn sich bspw. noch ein Kind oder ein Hund im Fahrzeug befindet. Die Meldung/Warnung/Alarmierung kann visuell, bspw. durch Anzeigen im Display, haptisch, bspw. durch Vibrieren, und/oder akustisch, bspw. durch Klingeln, des Mobilgeräts ausgegeben werden.

Weiterhin kann eine Warnung/Alarmierung in Abhängigkeit von der Entfernung zum Fahrzeug und/oder eines Zustandes des Fahrzeuges (bspw. Zentralverriegelung geschlossen) ausgegeben werden. Die Frequenz und/oder die Lautstärke der Warnung/Alarmierung können dabei stufenweise erhöht werden, wenn der Benutzer sich vom Fahrzeug weiter entfernt. Dabei kann es sich um eine Warn-Kaskade handeln.

Denkbar sind des Weiteren folgende Szenarien:
- Bei einem Motorausstellen erfolgt eine visuelle Meldung, bspw. durch Anzeige im Display des Mobilgeräts.
- Bei einem Verlassen und einer Entfernung vom Fahrzeug erfolgt eine haptische und/oder akustische Warnung/Alarmierung, bspw. durch Vibration und/oder Klingeln, des Mobilgeräts, ggf. mit abgestuften Frequenz und/oder Lautstärke der Warnung/Alarmierung, einer sog. Warn-Kaskade.

Zunächst kann bei einem Motorausstellen und/oder einer kleinen Entfernung zum Fahrzeug, bspw. von ung. 1 oder 2 Meter, dem Benutzer über das Mobilgerät mitgeteilt werden, dass sich ein Kind oder ein Hund im Fahrzeug befindet. Daraufhin kann dem Benutzer über das Mobilgerät eine Eingabemöglichkeit angeboten werden, zum Bestätigen, dass alles in Ordnung ist, bspw. wenn er nur kurz die Garage zu macht oder an den Kofferraum geht. Bei großer Entfernung, bspw. über 1 oder 2 Meter, und ohne eine Aktion des Benutzers kann eine haptische und/oder akustische Warnung/Alarmierung durch das Mobilgerät erfolgen. Zudem kann ein Alarm am Fahrzeug ausgelöst werden.

Zusätzlich kann ein einfaches Verriegeln von Türen/Klappen verhindert werden, wenn sich ein Kind/Hund im Fahrzeug befindet, nachdem aber der Benutzer das Fahrzeug verlassen hat.

Ferner kann eine doppelte Sicherheitsfunktion zum Verriegeln von Türen/Klappen vorgesehen werden. Der Nutzer muss hierzu aktiv und wiederholend, bspw. zwei Mal, das Verriegeln des Fahrzeuges auffordern, bevor die Verriegelung tatsächlich durchgeführt wird.

Weiterhin kann es vorteilhaft sein, wenn die Moduleinheit dazu ausgeführt ist, eine Gestensteuerung im Innenraum für mindestens eine von Fahrzeugfunktionen bereitzustellen, wie z. B.:
- Steuerung von Licht im Innenraum, insbesondere im Rücksitzbereich,
- Steuerung von Radio,
- Steuerung von Klimaanlage, usw.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung in Draufsicht auf ein Fahrzeug mit Komfortsystem bei der Einfahrt in Parkhaus,
- Fig. 2: eine schematische Darstellung des Fahrzeuges aus Figur 1 beim Erfassen von Objekten ums Fahrzeug durch die UWB-Moduleinheiten,
- Fig. 3: eine schematische Darstellung des Komfortsystems mit zwei UWB-Moduleinheit und einem fahrzeugseitigen Steuergerät,
- Fig. 4: eine schematische Darstellung des Komfortsystems mit zwei UWB-Moduleinheit und einem fahrzeugseitigen Steuergerät, und
- Fig. 5: eine schematische Darstellung der Verfahrensschritt des erfindungsgemäßen Verfahrens.

In den nachfolgenden Figuren werden für die gleichen technischen Merkmale auch von unterschiedlichen Ausführungsbeispielen die identischen Bezugszeichen verwendet.

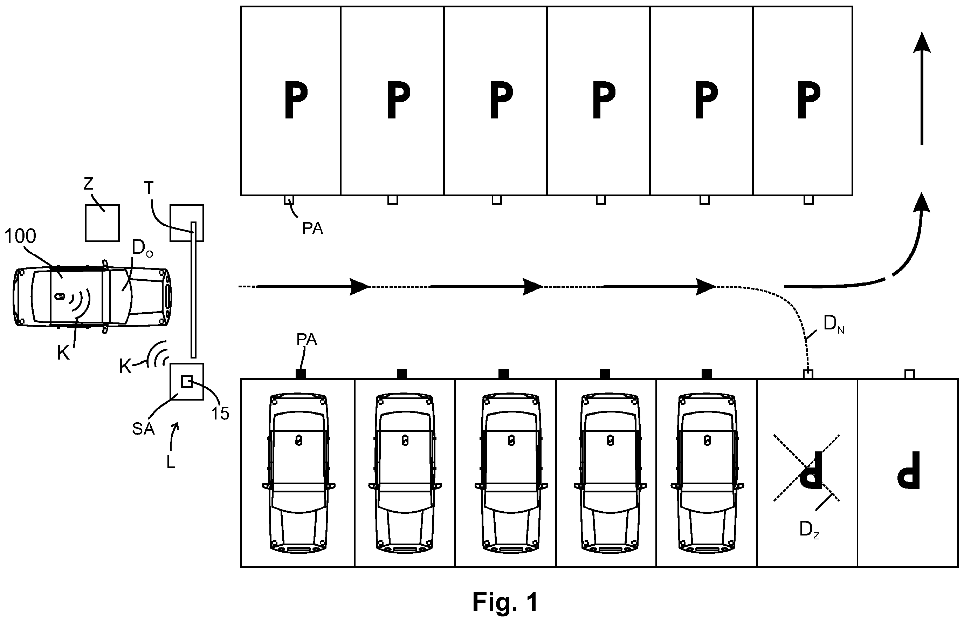

In der Figur 1 ist in Draufsicht eine übliche Parkhaussituation dargestellt. Dabei verfügt dieses Parkhaus über diverse Parkplätze die mit "P" gekennzeichnet sind. Wie gut zu erkennen ist, sind auf der rechten Seite in Fahrtrichtung des Fahrzeuges 100 die ersten fünf Parkplätze P durch parkende Fahrzeuge belegt. Eine vorhandene Parkplatzanzeige PA zeigt den belegten Zustand, insbesondere für ein einfahrendes Fahrzeug 100, welches vor einer Schrankenanlage T steht, an. Die freien Parkplätze P werden dementsprechend von der Parkplatzanzeige PA als frei angezeigt. Bevor nun ein Fahrzeug 100 seinen Parkplatz P sucht, steht es üblicherweise vor der Schrankenanlage T des Parkhauses. Hierbei weist das Parkhaus ein Fahrzeugleitsystem L auf, was sowohl mit der Schranke T und einem Zugangsterminal Z in Verbindung steht. Ferner weist das Fahrzeugleitsystem L eine stationäre Senderanlage SA auf, die mit einem Kommunikationsgerät 15, insbesondere mit UWB-Schnittstelle ausgestaltet ist, um eine Kommunikation K zum Fahrzeug 100 aufnehmen zu können. Fährt nun das Fahrzeug 100 vor die Schranke T, so muss es sich zunächst entsprechend authentifizieren, z. B. über einen ID-Code, der zwischen dem Fahrzeug 100 und der stationären Senderanlage SA ausgetauscht werden kann. Hierbei kann die UWB-Funktechnologie zum Einsatz kommen. Auch kann eine Authentifizierung des Fahrzeuges 100 oder ein Datenaustausch mit der stationären Senderanlage SA über eine BLE-Einheit 14 erfolgen. Soll bei dem Parkvorgang auch gleichzeitig eine Bezahlfunktion für den Parkplatz ausgelöst werden, so kann auch der Bezahlvorgang über Funk (z. B. NFC-Technologie) das Zugangsterminal Z mit Bezahlmöglichkeit erfolgen. Idealerweise findet hier ein automatischer Datenaustausch zwischen einem Komfortsystem 10 vom Fahrzeug 100 und dem Zugangsterminal Z über eine NFC-Schnittstelle statt. Zu diesem Zweck ist das entsprechende Komfortsystem10 im Fahrzeug 100 mit einer NFC-Einheit 13 ausgestattet.

Damit nun das Fahrzeug 100 seinen zugewiesenen Parkplatz erhält kann es die entsprechenden Daten D_{O}, D_{Z} und/oder D_{N} von dem Fahrzeugleitsystem L per Funk erhalten. Diese Daten können in einem Fahrzeugassistenzsystem 16 oder Fahrzeugsystem 16 mithilfe einer Anzeige 16.1 im Fahrzeug 100 angezeigt werden. Hierbei kann ein Benutzer 90 auch ggf. einen Wunsch zu seinem Parkplatz P eingeben, wodurch sich die Zieldaten D_{Z} entsprechend verändern lassen. Sobald nun der Benutzer 90 (optional) bestätigt, dass die Zieldaten D_{Z} seinem Wunsch entsprechen, wird zumindest die erste Fahrzeugfunktion F, insbesondere Navigationsfunktion Fn erzeugt und an das Fahrzeugassistenzsystem 16 weitergeleitet. Nun kann der Benutzer 90 entweder den optimalen Fahrweg zum Zielort in der Anzeige 16.1 ablesen oder bei einem automatischen Fahrzeugassistenzsystem 16 fährt das Fahrzeug 100 automatisch den optimalen Fahrweg ab und parkt auf dem gewünschten Parkplatz mit den Zieldaten Dz. Hierdurch erreicht der Benutzer 90 vollautomatisch mit seinem Fahrzeug 100 den gewünschten Parkplatz.

Ebenfalls ist es vorstellbar, dass auch der Ausparkvorgang, genauso wie der Einparkvorgang, von dem Fahrzeugleitsystem L des Parkhauses und dem Komfortsystem 10 im Fahrzeug 100 vollautomatisch oder halbautomatisch unterstützt wird, um aus dem Parkhaus wieder herauszufahren.

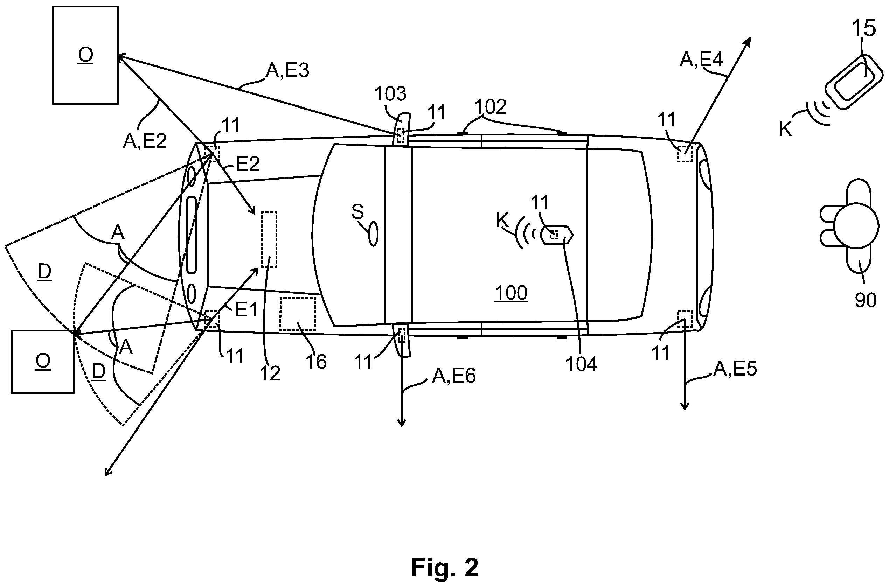

In der Figur 2 ist das Fahrzeug 100 detaillierter in Draufsicht mit einem Komfortsystem 10 mit mehreren UWB-Moduleinheiten 11 gezeigt. Dabei sind die einzelnen UWB-Moduleinheiten 11 durch ihre Schnittstellen 11.4 mit einem fahrzeugseitigen Steuergerät 12 verbunden, welches ebenfalls eine entsprechende Schnittstelle 12.1 hierzu aufweist. Dabei besteht die Kernidee des Komfortsystems darin, dass ein Einpark- und/oder Ausparkvorgang bei einem Parkhaus verbessert wird.

In der Figur 2 steht das Fahrzeug 100 vorwärts vor zwei Objekten O. Bei dem Komfortsystem 10 sind bspw. diverse UWB-Moduleinheiten 11 rund um das Fahrzeug 100 angeordnet, diese können links- und rechtsseitig im Frontbereich sowie im Heckbereich vorgesehen sein. Auch können in den links- und rechtsseitigen Spiegeln 103, sowie den Türgriffen 102 vom Fahrzeug 100 angeordnet sein. Auf dem Dach des Fahrzeuges 100 kann im Bereich des Schiebedachs oder einer Dach-Finne 104 ebenfalls eine Moduleinheit 11 des Komfortsystems 10 vorgesehen sein. Das Komfortsystem 10 kann auch dazu dienen, dass ein Benutzer 90 über ein mobiles Kommunikationsgerät 15 mit einer UWB-Schnittstelle einen Zugang zum Fahrzeug 100 erhält. Im vorliegenden Fall ist das mobile Kommunikationsgerät 15 mit UWB-Schnittstelle als ein Mobilfunktelefon ausgestaltet, was der Benutzer 90 bei sich trägt. Hierdurch lässt sich auch ein Passiv-Keyless-Entry-System generieren, bei dem ein Identifikationsvorgang durch das Komfortsystem 10 über die Fahrzeugfunktion F ausgelöst wird. Zuvor kann eine Annäherung des Benutzers 90 im ersten Modus I der Moduleinheiten 11 erkannt werden, wobei im zweiten Modus II der Moduleinheiten 11 ein Identifizierungscode zwischen zumindest einer UWB-Moduleinheit 11 und dem mobilen Kommunikationsgerät 15 mit UWB-Schnittstelle ausgelöst wird.

Des Weiteren erfassen die vorhandenen Moduleinheiten 11 des Komfortsystems 10 im ersten Modus I (der Detektion D) das Umfeld vom Fahrzeug 100 und senden die Informationen, die aus Abstandsinformationen A zu den erfassten Objekten O gehören, als Ereignisse E1 und andere (E2 usw.) an die fahrzeugseitige Steuereinheit 12. Die Steuereinheit 12, die diese Ereignisse E1 u.a. zeitgleich durch ihre Schnittstelle 12.1 erhält, speichert diese in einer Speichereinheit 12.2 ggf. mit weiteren Daten D_{F} vom Fahrzeug und/oder Daten D_{F} der Fahrzeugsensoren, um diese dann weiterverarbeiten zu können. Anhand der Abstandsinformationen A von den einzelnen Moduleinheiten 11 ist das Steuergerät 12 in der Lage, eine genaue Ortung der Objekte O rund ums Fahrzeug 100 vorzunehmen. Somit kann quasi eine Karte zum 360°-Umfeld des Fahrzeugs 100 erstellt werden, die mit den Navigationsdaten D_{N} abgeglichen werden können.

Ferner ist das Steuergerät 12 in der Lage, die aktuellen Ortsdaten D_{O} des Fahrzeuges aus dem Fahrweg des Fahrzeuges 100 zu berechnen. Auch kann zu diesem Zweck eine oder mehrere UWB-Moduleinheiten 11 im Modus II eine Kommunikation K mit dem stationären Kommunikationsgerät 15 des Fahrzeugleitsystems L vom Parkhaus der Garage aufnehmen.

Ferner wird die Ortungsfunktion zweier Objekte O durch die beiden frontseitigen UWB-Moduleinheiten 11 schematisch dargestellt. Wie gut zu erkennen ist, detektieren die beiden frontseitigen UWB-Moduleinheiten 11 die beiden Objekte O und erfassen messtechnisch den jeweiligen Abstand A zwischen der jeweiligen Moduleinheit 11 und dem Objekt O. Beim linksseitigen Objekt O ist der Abstand A von beiden frontseitigen UWB-Moduleinheiten 11 eingezeichnet und auch als Kreissegment jeweils skizziert. Wie weiter gut zu erkennen ist, bilden diese bspw. an der Kante des Objektes O ein gemeinsamer Schnittpunkt. Da die beiden frontseitigen UWB-Moduleinheiten 11 den jeweiligen Abstand A als Ereignis E1 (von der linksseitigen vorderen UWB-Moduleinheit 11) und das Ereignis E2 (von der rechtsseitigen UWB-Moduleinheit) an das Steuergerät 12 übermitteln, kann das Steuergerät 12 eine Ortung des Objekts O vornehmen. Anhand der Vielzahl der erfassten Ereignisse E1 o.a. von den jeweiligen UWB-Moduleinheiten 11 kann somit das Steuergerät 12 eine 360°-Umfelderfassung vornehmen. Diese kann zusätzlich mit den Fahrzeugdaten D_{F} und/oder den Daten D_{F} vom Fahrzeugsensor als Situationsdaten aus einer gleichen Zeit zusammengefasst werden.

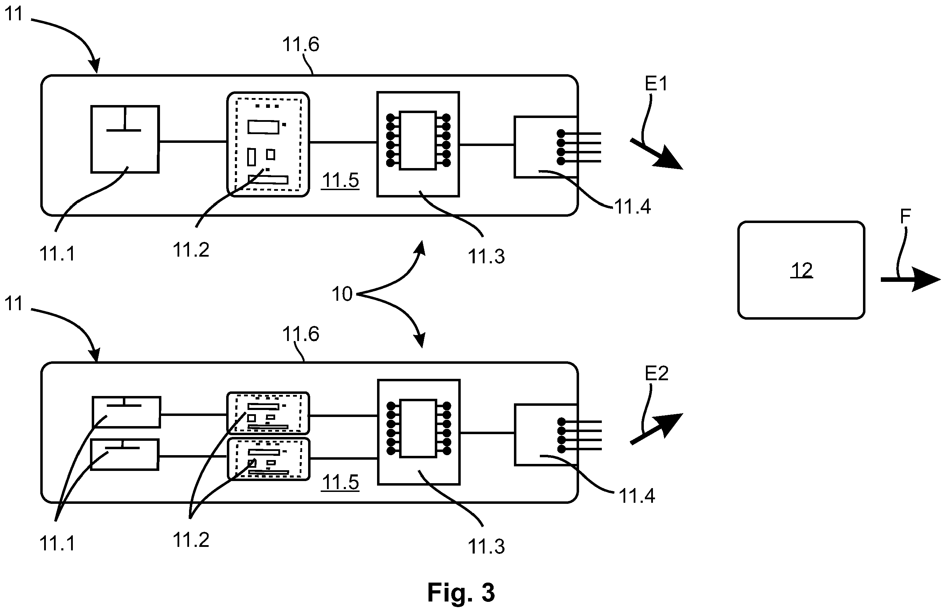

In der Figur 3 ist das Komfortsystem 10 mit zwei UWB-Moduleinheiten 11 dargestellt. Dabei ist die obere Moduleinheit 11 etwas anders als die untere UWB-Moduleinheit 11 aufgebaut. Beide UWB-Moduleinheiten 11 dienen zur Detektion D und Kommunikation K und senden die entsprechenden Informationen als Ereignisse E1 und E2 an das fahrzeugseitige Steuergerät 12, welches anhand dieser Daten eine Fahrzeugfunktion F auslösen kann. Grundsätzlich weist eine Moduleinheit 11 zumindest eine UWB-Antenne 11.1 auf, die zum Senden und/oder Empfangen von Signalen und/oder Daten geeignet ist. Dabei wird die entsprechende UWB-Antenne 11.1 durch einen UWB-Sendeempfänger 11.2 angesteuert. Die von der Verarbeitungsvorrichtung 11.3 erhaltenen Signalen und/oder Daten werden in einer Verarbeitungsvorrichtung 11.3 aufgearbeitet und an eine Schnittstelle 11.4 der UWB-Moduleinheit 11 weitergeleitet um sie an das Steuergerät 12 zu übertragen. Zweckmäßigerweise ist die UWB-Antenne 11.1, der UWB-Sendeempfänger 11.2 sowie die Verarbeitungsvorrichtung 11.3 mit der Schnittstelle 11.4 auf einer Leiterplatte 11.5 angeordnet. Diese Elemente sind in einem gemeinsamen Gehäuse 11.6 untergebracht.

In der unteren UWB-Moduleinheit 11 kommen anstelle einer UWB-Antenne 11.1 zwei UWB-Antennen 11.1, nämlich zum Senden und zum Empfangen oder für die Detektion D und die Kommunikation K (getrennt) zum Einsatz, die durch entsprechende UWB-Sendeempfänger 11.2 angesprochen werden. Die beiden UWB-Sendeempfänger 11.2 sind ebenfalls mit einer Verarbeitungsvorrichtung 11.3 verbunden. Die Verarbeitungsvorrichtung 11.3 kann eine Umschaltung zwischen Detektion und Kommunikation bzw. zwischen Senden und Empfangen vornehmen. Auch bei der unteren UWB-Moduleinheit 11 sind sämtliche elektrischen Bauteile auf einer Leiterplatte 11.5 angeordnet. Es sei noch erwähnt, dass die vorhandenen UWB-Antennen 11.1 als Leiterbahn auf der Leiterplatte 11.5., insbesondere durch ein fotolithografisches Verfahren, herstellbar sind.

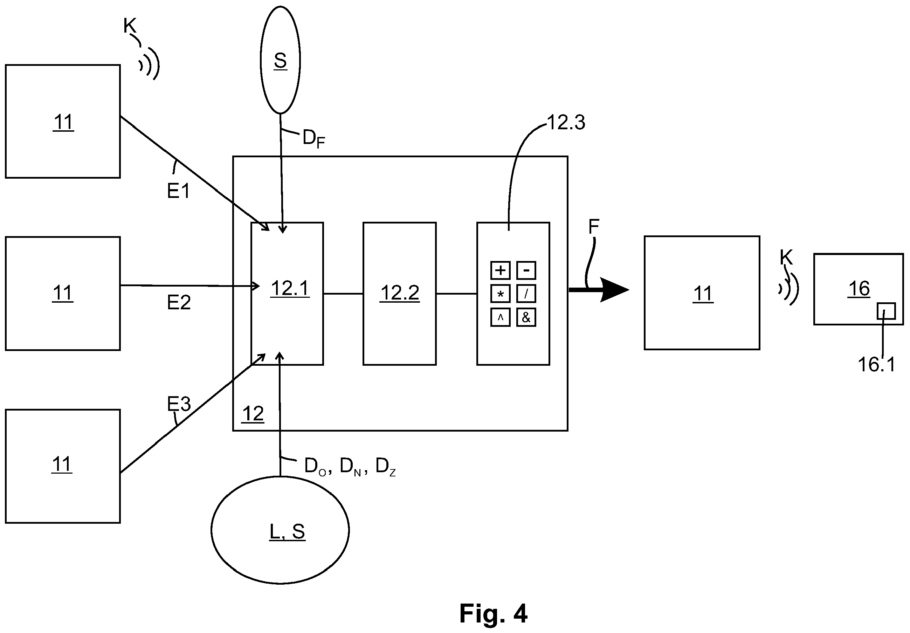

In der Figur 4 ist ein schematischer Aufbau des Komfortsystems 10 mit der Steuereinheit 12 zur Auslösung der Fahrzeugfunktion F für ein Fahrzeugassistenzsystem 16 gezeigt. Dabei liefern die drei beispielhaft eingezeichneten UWB-Moduleinheiten 11 (1, 2 und 3) die Ereignisse E1, E2, E3 als Abstandsinformationen (Informationen zum Abstand A) an das Steuergerät 12. Hierzu dient die Schnittstelle 12.1 im Steuergerät 12 um die entsprechenden Daten aufnehmen zu können. Ferner können auch die Daten D_{F} vom Fahrzeug und/oder von den Fahrzeugsensoren S über die Schnittstelle 12.1 zum Steuergerät 12 gelangen.

Zweckmäßigerweise werden die Daten E1, E2, E3 sowie D_{F} von der gleichen Zeit über die Schnittstelle 12.1 an eine Speichereinheit 12.2 im Steuergerät 12 weitergeleitet. Hier können die erwähnten Daten als Ist-Daten zusammengefasst und gespeichert werden. Auch die Daten D_{O}, D_{Z} und/oder D_{N} können in der Speichereinheit 12.2 im Steuergerät 12 mit als Ist-Daten gespeichert sein. Um die gewünschte Fahrzeugfunktion F, insbesondere Navigationsfunktion Fn zu generieren ist im Steuergerät 12 zusätzlich eine Auswerteeinheit 12.3 vorhanden. Anhand der Ist-Daten kann durch einen Auswertealgorithmus und/oder ein Auswertemodell in der Auswerteeinheit 12.3 eine oder mehrere Fahrzeugfunktionen F erzeugt werden, die an das Fahrzeugassistenzsystem 16 weitergeleitet werden.

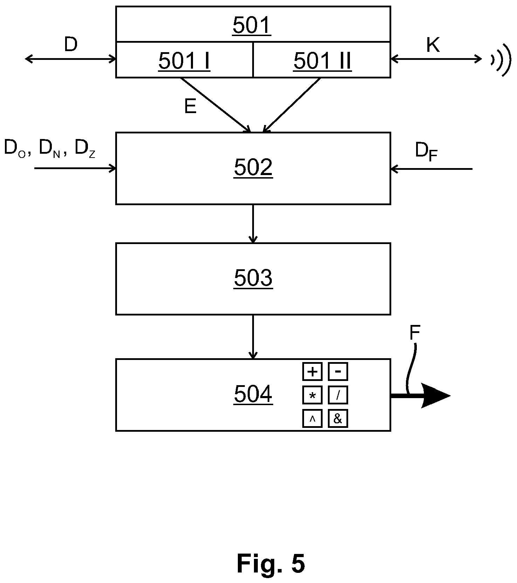

In der Figur 5 ist das erfindungsgemäße Verfahren mit den Schritten 501, 502, 503 und 504 schematisch dargestellt. Im Schritt 501 werden die UWB-Moduleinheiten11 zur Detektion D und Kommunikation K betrieben. Die Detektion D ist als Schritt 501.1 dargestellt. Die Kommunikation K hingegen als Schritt 501.11. Sofern beide Modis I und II simultan stattfinden, wird nur das Bezugszeichen 501 verwendet. Die Ergebnisse E aus der Detektion von den UWB-Moduleinheiten 11 gehen im Schritt 502 gemeinsam mit den Daten D_{O}, D_{Z} und/oder D_{N} sowie ggf. den Daten D_{F} vom Fahrzeug 100 über die Schnittstelle 12.1 an das Steuergerät 12. Im Schritt 503 werden die Daten der Schnittstelle 12.1 aus Schritt 502 zeitgleich als Ist-Daten in der Speichereinheit 12.2 vom Steuergerät 12 gespeichert. Im weiteren Schritt 504 findet dann in der Auswerteeinheit 12.3 eine Auswertung der Ist-Daten statt, um zumindest die erste Fahrzeugfunktion F, insbesondere die Navigationsfunktion Fn zu erzeugen. Die erzeugte Fahrzeugfunktion F wird dann an das Fahrzeugassistenzsystem 16 weitergeleitet.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Komfortsystem
- 11: UWB-Moduleinheit
- 11.1: UWB-Antenne
- 11.2: UWB-Sendeempfänger
- 11.3: Verarbeitungsvorrichtung
- 11.4: Schnittstelle
- 11.5: Leiterplatte
- 11.6: Gehäuse
- 12: Steuergerät (fahrzeugseitig)
- 12.1: Schnittstelle
- 12.2: Speichereinheit
- 12.3: Auswerteeinheit
- 13: NFC-Einheit
- 14: BLE-Einheit
- 15: Kommunikationsgerät, insbesondere mit UWB-Schnittstelle / stationäre Sende
- 16: Fahrzeugassistenzsystem / Fahrzeugsystem
- 16.1: Anzeige von 16
- 90: Benutzer
- 100: Fahrzeug
- 101: Tür, Heckklappe
- 102: Türgriff
- 103: Spiegel
- 104: Dach-Finne, insbesondere mit GPS-Antenne und 11
- A: Abstand, insbesondere zwischen 11 und O
- D: Detektion von 11
- D_{F}: Daten vom Fahrzeug oder den Sensoren
- D_{O}: Ortsdaten von 100, insbesondere aktuelle
- D_{Z}: Zieldaten für 100
- D_{N}: Navigationsdaten / elektr. Karten
- Ex: Ereignis von UWB-Moduleinheit 11 (x)
- F: Fahrzeugfunktion
- K: Kommunikation von 11
- L: Fahrzeugleitsystem
- O: Objekt
- PA: Parkplatzanzeige (zeigt Zustand an)
- S: Sensor von 100
- SA: stationäre Senderanlage von L (mit 15)
- T: Tor, Schranke oder dergleichen
- Z: Zugangsterminal (mit Bezahlmöglichkeit)

## Patentansprüche

1. Komfortsystem (10) für ein Fahrzeug (100) mit zumindest einer UWB-Moduleinheit (11), zum Bereitstellen von zumindest einer Fahrzeugfunktion (F), insbesondere einer Navigationsfunktion (Fn) bei einem Fahrzeug (100), aufweisend:
eine UWB-Antenne (11.1) zum Durchführen einer Kommunikation (K) und/oder Detektion (D),
wobei in Abhängigkeit von der Kommunikation (K) und/oder Detektion (D) die Fahrzeugfunktion (F) aktivierbar ist,
ein, insbesondere elektronischer, UWB-Sendeempfänger (11.2) zum Aussenden und/oder Empfangen von elektrischen Signalen von der UWB-Antenne (11.1), die für die Kommunikation (K) und/oder Detektion (D) spezifisch sind,
eine, insbesondere elektronische, Verarbeitungsvorrichtung (11.3) zur Ansteuerung des UWB-Sendeempfängers (11.2), um eine Kommunikation (K) und/oder Detektion (D) durch die UWB-Antenne (11.1) durchzuführen,
und eine, insbesondere elektronische, Schnittstelle (11.4) zum Übermitteln eines Ergebnisses der Detektion (D) und/oder Kommunikation (K) an ein, insbesondere fahrzeugseitiges Steuergerät (12), um die Fahrzeugfunktion (F) in Abhängigkeit von der Detektion (D) und/oder Kommunikation (K) auszulösen.

2. Komfortsystem (10) nach Anspruch 1,
**dadurch gekennzeichnet,**
**dass** Daten zum aktuellen Ort des Fahrzeuges (100) als Ortsdaten D_{O} und/oder Daten zu einem definierten Zielort des Fahrzeuges (100) als Zieldaten D_{Z} und/oder Daten zur Navigation des Fahrzeuges (100) aus der Umgebung als Navigationsdaten D_{N} an das fahrzeugseitige Steuergerät (12) übermittelbar sind,
wobei vorzugsweise zumindest ein Ergebnis (E) einer UWB-Moduleinheit (11) an das Steuergerät (12) übertragbar ist, wobei durch die Fahrzeugfunktion (F), insbesondere Navigationsfunktion (Fn), eine Navigation des Fahrzeuges (100) vom aktuellen Ort des Fahrzeuges zum definierten Zielort des Fahrzeuges (100) anhand der Ortsdaten (D_{O}) und/oder Zieldaten (D_{Z}) und/oder Navigationsdaten (D_{N}) sowie zumindest einem Ereignis (E) ausführbar ist.

3. Komfortsystem (10) nach Anspruch 1 oder 2,
**dadurch gekennzeichnet,**
**dass** die UWB-Antenne (11.1) in einem Frequenzbereich mit einer Bandbreite von mindestens 500 MHz oder von mindestens 20 % des arithmetischen Mittelwertes von unterer und oberer Grenzfrequenz des genutzten Frequenzbandes betreibbar ist, wobei vorzugsweise der Frequenzbereich zwischen 30 MHz bis 10,6 GHz, bevorzugt zwischen 3,0 bis 10,6 GHz liegt,
und/oder dass bei der Kommunikation (K) ein Datenaustausch zwischen der UWB-Moduleinheit (11) und einem Kommunikationsgerät mit UWB-Schnittstelle (15) erfolgt, und
bei einer Detektion (D) eine messtechnische Erfassung von zumindest einem Objekt (O) anhand von reflektierenden Signalen erfolgt, wobei dieses Signal zuvor von der UWB-Antenne (11.1) stammen und zumindest eine Abstandmessung zum Objekt (O) ermöglichen.

4. Komfortsystem (10) nach einem der vorhergehenden Ansprüche,
**dadurch gekennzeichnet,**
**dass** zumindest zwei UWB-Moduleinheit (11) für ein Fahrzeug (100) vorgesehen sind, wobei die jeweiligen Ergebnisse der UWB-Moduleinheiten (11) im Steuergerät (12) verarbeitbar sind, um bei der Detektion (D) neben einer Abstandmessung zum Objekt (O) auch eine Ortungsmessung des Objekts (O) zu bewirken,
und/oder dass zumindest 2 UWB-Moduleinheiten (11), bevorzugt 4 UWB-Moduleinheiten (11) und besonders bevorzugt 5 UWB-Moduleinheiten (11) vorhanden sind.

5. Komfortsystem (10) nach einem der vorhergehenden Ansprüche,
**dadurch gekennzeichnet,**
**dass** im Steuergerät (12) wenigstens eine Speichereinheit (12.2) vorhanden ist, womit Daten von der Schnittstelle (11.4), insbesondere der Ergebnisse (E) von zumindest einer UWB-Moduleinheit (11), weitere Daten (D_{F}) vom Fahrzeug (100), Ortsdaten D_{O}, Zieldaten Dz und/oder Navigationsdaten D_{N} als Ist-Daten speicherbar sind,
wobei insbesondere aus diesen Ist-Daten die definierte Fahrzeugfunktion (F), insbesondere Navigationsfunktion (Fn), durch das Steuergerät (12) auslösbar ist.

6. Komfortsystem (10) nach einem der vorhergehenden Ansprüche,
**dadurch gekennzeichnet,**
**dass** die jeweiligen Ergebnisse (E) der UWB-Moduleinheiten (11) eine Umfeld-Erfassung vom Fahrzeug (100), insbesondere ein 360° Umfeld-Erfassung, anhand der Objekte (O) ums Fahrzeug (100) zu einer Zeit bilden und im Steuergerät (12) gespeichert sind, und/oder dass bei der UWB-Moduleinheit (11) zumindest die UWB-Antenne (11.1) sowie der UWB-Sendeempfänger (11.2) auf einer gemeinsamen Leiterplatte (11.5) angeordnet sind, wobei die UWB-Antenne (11.1) durch eine Leiterbahn auf einer Leiterplatte (11.5) der UWB-Einheit ausgebildet ist,
wobei vorzugsweise auch die Verarbeitungsvorrichtung (11.3) auf der Leiterplatte (11.5) angeordnet ist und/oder die UWB-Antenne (11.1) durch ein fotolithografisches Verfahren auf der Leiterplatte (11.5) hergestellt ist.

7. Komfortsystem (10) nach einem der vorhergehenden Ansprüche,
**dadurch gekennzeichnet,**
**dass** bei der UWB-Moduleinheit (11) die Verarbeitungsvorrichtung (11.3) und/oder der UWB-Sendeempfänger (11.2) in Form eines Mikrocontrollers, insbesondere mit einer Speichereinheit (12.2) ausgeführt ist,
und/oder dass bei der UWB-Moduleinheit (11) zwei UWB-Antenne (11.1) zum Einsatz kommen, wobei eine UWB-Antenne (11.1) zur Kommunikation (K) dient und die andere UWB-Antenne (11.1) zur Detektion (D) dient,
und/oder dass die UWB-Moduleinheit (11) über die UWB-Antenne (11.1) einen Identifizierungscode und/oder einen Funktionscode mit zumindest einem Kommunikationsgerät vom Fahrzeug (100) oder einem externen Kommunikationsgerät austauscht.

8. Komfortsystem (10) nach einem der vorhergehenden Ansprüche,
**dadurch gekennzeichnet,**
**dass** zumindest eine NFC-Einheit (13) oder eine BLE-Einheit (14) vorhanden ist, um den Funktionsumfang des Komfortsystems (10) zu erhöhen,
welche vorzugsweise innerhalb eines Gehäuses (11.6) einer UWB-Moduleinheit (11) angeordnet sind,
wobei insbesondere die NFC-Einheit (13) und/oder eine BLE-Einheit (14) ebenfalls Daten generieren.

9. Komfortsystem (10) nach einem der vorhergehenden Ansprüche,
**dadurch gekennzeichnet,**
**dass** das Steuergerät (12) über eine Daten-Schnittstelle (11.4) weitere Daten vom Fahrzeug (100) erhält, wobei insbesondere Daten zur
• Geschwindigkeit
• Position / Ort (D_{O})
• Uhrzeit
• Datum
• Temperatur
• Feuchtigkeit
• Helligkeit
mit in die Datenverarbeitung der Steuereinheit (12) eingehen und Einfluss nehmen auf die Fahrzeugfunktion (F), insbesondere Navigationsfunktion (F_{N}).

10. Komfortsystem (10) nach einem der vorhergehenden Ansprüche,
**dadurch gekennzeichnet,**
**dass** die Fahrzeugfunktionen (F) zumindest einer der folgenden Funktionen umfasst:
- Lenkbefehl an das Fahrzeugmanagementsystem
- Geschwindigkeitsbefehl an das Fahrzeugmanagementsystem
- Bremsbefehl an das Fahrzeugmanagementsystem
- Identifikationsvorgang mit einem Kommunikationsgerät
- Ver- oder Entriegeln einer Zentralverriegelung
- Öffnen oder Schließen einer Tür (101) oder Klappe vom Fahrzeug (100)
- Ein- oder Ausschalten von Licht im Fahrzeug (100)
- Ein- oder Ausschalten von einer Alarmanlage im Fahrzeug (100)
- Ein- oder Ausschalten von einer Heizung oder Klimaanlage im Fahrzeug (100)
- Schließen von Fenstern oder Schiebedach vom Fahrzeug (100)
- Ein- oder Ausklappen von Spiegeln (103)
- Ein- oder Ausklappen einer Anhängerkupplung

11. Fahrzeug (100) mit zumindest einem Komfortsystem (10) nach einem der vorhergehenden Ansprüche, wobei insbesondere
dass wenigstens eine UWB-Moduleinheit (11) für eine Fahrzeugfunktion (F), insbesondere eine Navigationsfunktion (Fn), vorgesehen ist, und/oder eine oder mehrere UWB-Moduleinheiten (11), insbesondere außenseitig am Fahrzeug (100), links- und/oder rechtsseitig im Front- und/oder Heckbereich, am Fahrzeugdach, bevorzugt in einer Finne am Fahrzeugdach, am Außenspiegel, an einer A-, B- und/oder C-Säulenverkleidung und/oder an einem Türgriff (102) angeordnet ist/sind.

12. Verfahren zum Auslösen einer Fahrzeugfunktion (F), insbesondere eine Navigationsfunktion (Fn), eines Fahrzeuges (100) durch ein Komfortsystem (10), insbesondere nach einem der vorhergehenden Ansprüche, umfassend mindestens eine UWB-Moduleinheit (11),
wobei die UWB-Moduleinheit (11) in einem ersten Modus (I) als eine Detektionseinheit zum Durchführen einer Detektion (D) von Objekten (O) um das Fahrzeug (100) betrieben wird,
und wobei die UWB-Moduleinheit (11) in einem zweiten Modus (II) als eine Kommunikationseinheit zum Durchführen einer Kommunikation (K) mit einem Kommunikationsgerät mit UWB-Schnittstelle (15) betrieben wird,
wodurch vorzugsweise ein autonomes Fahren, insbesondere Einparken, des Fahrzeugs (100) zwischen einem aktuellen Ort (D_{O}) des Fahrzeuges (100) und einem definierten Zielort (D_{Z}) des Fahrzeuges (100) ermöglicht wird.

13. Verfahren nach dem vorhergehenden Anspruch,
**dadurch gekennzeichnet,**
**dass** Daten zum aktuellen Ort des Fahrzeuges als Ortsdaten D_{O} und/oder Daten zu einem definierten Zielort des Fahrzeuges als Zieldaten D_{Z} und/oder Daten zur Navigation des Fahrzeuges aus der Umgebung als Navigationsdaten D_{N} an das fahrzeugseitige Steuergerät (12) übermittelt werden,
wobei vorzugsweise zumindest ein Ergebnis (E) einer UWB-Moduleinheit (11) an das Steuergerät (12) übertragen wird, wobei durch die Fahrzeugfunktion (F), insbesondere eine Navigationsfunktion (Fn), eine Navigation des Fahrzeuges (100) vom aktuellen Ort des Fahrzeuges zum definierten Zielort des Fahrzeuges anhand der Ortsdaten (D_{O}) und/oder Zieldaten D_{Z} und/oder Navigationsdaten D_{N} sowie zumindest einem Ereignis (E) ausgeführt wird.

14. Verfahren nach dem vorhergehenden Anspruch,
**dadurch gekennzeichnet,**
**dass** die UWB-Moduleinheit (11) simultan im ersten Modus (I) und im zweiten Modus (II) betrieben wird,
oder dass die UWB-Moduleinheit (11) alternierend im ersten Modus (I) oder im zweiten Modus (II) betrieben wird,
und/oder dass zumindest eine UWB-Moduleinheit (11) im ersten Modus (I) zur Detektion (D) von Objekten (O) um das Fahrzeug (100) betrieben wird, und
das Ergebnis (E1) aus der Detektion (D) von der UWB-Moduleinheit (11) ans Steuergerät (12) (über die Schnittstelle 12.1) weitergeleitet werden, und
im Steuergerät (12) das Ergebnis (E1) datentechnisch verarbeitet wird,
wobei insbesondere weitere Ergebnisse (E2) der UWB-Moduleinheiten (11) und/oder Daten (D_{F}) vom Fahrzeug (100) und/oder den Fahrzeug-Sensoren derselben Zeit im Steuergerät (12) als Situations-Daten (D_{S}) verarbeitet und/oder gespeichert werden.

15. Verfahren nach dem vorhergehenden Anspruch,
**dadurch gekennzeichnet,**
**dass** zeitgleich jede UWB-Moduleinheit (11) ein Ergebnis (E1) erfasst, die zusammengefasst eine Umfeld-Erfassung vom Fahrzeug (100), insbesondere ein 360° Umfeld-Erfassung, anhand der Objekte (O) ums Fahrzeug (100) bilden, und zeitgleich mit weiteren Daten (D_{F}) vom Fahrzeug (100), Ortsdaten D_{O}, Zieldaten D_{Z} und/oder Navigationsdaten D_{N} als Ist-Daten im Steuergerät (12) gespeichert werden.

16. Verfahren nach einem der vorhergehenden Ansprüche,
**dadurch gekennzeichnet,**
**dass** aus den Ist-Daten die definierte Fahrzeugfunktion (F), insbesondere Navigationsfunktion (Fn) erzeugbar ist, und ein autonomes Fahren, insbesondere Einparken, des Fahrzeugs (100) zwischen einem aktuellen Ort des Fahrzeuges und einem definierten Zielort des Fahrzeuges ermöglicht wird,
und/oder dass bei der Erzeugung der Ist-Daten eine Überprüfung der definierte Fahrzeugfunktion (F), insbesondere Navigationsfunktion (Fn), mit den Navigationsdaten D_{N} und/oder zumindest einem Abstand A zu einem Objekt (O) erfolgt, um Kollisionen beim autonomen Fahren, insbesondere Einparken, des Fahrzeugs (100) im Vorfeld zu vermeiden.
